# FASCICULE DE BREVET EUROPEEN

(11) **EP 3 686 427 B1**
(45) Date de publication et mention de la délivrance du brevet: **20.04.2022**
(21) Numéro de dépôt: 20153024.3
(22) Date de dépôt: 22.01.2020
(51) Int. Cl.: F04B 15/00, F04B 15/02, F04B 53/02, F04B 53/16

(54) **POMPE POUR PRODUIT LIQUIDE COMPRENANT UN DISPOSITIF D'ÉTANCHÉITÉ ET INSTALLATION DE PULVÉRISATION COMPRENANT UNE TELLE POMPE**
PUMPE FÜR FLÜSSIGES PRODUKT, DIE EINE DICHTUNGSVORRICHTUNG UMFASST, UND SPRÜHANLAGE, DIE EINE SOLCHE PUMPE UMFASST
PUMP FOR A LIQUID PRODUCT COMPRISING A SEALING DEVICE AND SPRAYING SYSTEM COMPRISING SUCH A PUMP

(30) Priorité: 23.01.2019 FR 1900588
(43) Date de publication de la demande: 29.07.2020
(73) Titulaire: Exel Industries, 51200 Epernay (FR)
(72) Inventeur: PLANTARD, Nicolas, 75009 PARIS (FR); KHALDI, Boussif, 75009 PARIS (FR)
(74) Mandataire: Lavoix

(56) Documents cités:
- EP-A1- 3 203 067
- FR-A- 798 995
- US-A- 3 181 473
- US-A- 3 632 235

## Description

La présente invention concerne une pompe pour produit liquide comportant un corps délimitant intérieurement une chambre de compression, dans laquelle un piston est monté coulissant, ainsi qu'un moteur extérieur relié au piston pour son déplacement par une tige de piston traversant une paroi solidaire du corps de pompe, au travers d'une ouverture de passage équipé d'un dispositif d'étanchéité comportant un empilement de joints maintenus serrés axialement contre le corps de pompe. Le dispositif d'étanchéité comporte un organe de compression axial interposé entre une couronne, comprise dans le dispositif d'étanchéité, et la paroi solidaire du corps de pompe, dans laquelle la couronne délimite, en partie, un logement de réception destiné à accueillir l'organe de compression axial.

Dans le domaine des pompes pour produits liquides et plus particulièrement le domaine des pompes à piston, un moteur entraîne une tige de piston en translation dans une chambre de la pompe, de manière à faire coulisser le piston dans un mouvement alternatif à l'intérieur de la chambre. La chambre et le piston délimitent ainsi un volume variable qui évolue de manière cyclique entre un volume minimal et un volume maximal, rythmé par les allers et retours du piston dans la chambre. La variation du volume de la chambre permet d'aspirer puis de refouler un produit liquide, admis dans la chambre à volume variable par une ouverture d'entrée et évacué hors de la pompe par une ouverture de sortie. Les pompes à piston fonctionnent de manière cyclique, un cycle comprend généralement une phase d'aspiration du produit liquide et une phase de refoulement du produit liquide. Les phases d'aspiration et de refoulement sont corrélées avec les mouvements de translation alternatifs du piston dans la chambre.

Les pompes à pistons sont particulièrement adaptées pour des pressions élevées, allant jusqu'à 500 bars.

De telles pompes, sont par exemple, utilisées dans le domaine de la projection ou de la pulvérisation de peinture, tout particulièrement pour la pulvérisation « airless ». La pulvérisation « airless » est un procédé de pulvérisation dans lequel un produit est pulvérisé à haute pression, sans ajout d'air, afin d'être appliqué sur une surface cible.

Le moteur étant situé à l'extérieur du corps de la pompe, une tige traversant le corps de pompe relie le moteur extérieur au piston situé dans le corps de pompe.

Un dispositif formé d'un empilement de joints chevrons est utilisé pour assurer l'étanchéité entre la tige de piston et le corps de pompe ou une partie solidaire de ce corps. Un empilement de joints chevrons comporte plusieurs étages de joints, chacun en forme de chevron ou de V adaptés pour assurer l'étanchéité dans des pompes fonctionnant avec des mouvements alternatifs, comme c'est le cas des pompes à pistons. L'empilement de joints chevrons se situe au niveau d'une ouverture de passage à travers laquelle le piston évolue pendant son mouvement de translation alternatif.

US-3 632 235-A décrit, par exemple, un moteur de pompe cryogénique à piston, comprenant un tel empilement de joints, les joints étant maintenus en compression par des rondelles élastiques. Cependant, lorsque l'usure des joints dépasse un certain seuil, les rondelles élastiques ne suffisent plus à maintenir une compression suffisante.

Un presse étoupe est nécessaire pour resserrer périodiquement et manuellement l'empilement de joints, qui font l'objet d'une usure au fil des utilisations de la pompe. Les joints chevrons usés ne sont plus assez comprimés et ne remplissent donc pas leur fonction de joint d'étanchéité, des fuites peuvent alors apparaitre. Il s'agit alors de resserrer les joints, par compression, pour permettre à l'empilement de joints de remplir sa fonction de dispositif d'étanchéité.

Un tel dispositif d'étanchéité nécessite un entretien régulier, consistant à resserrer les joints chevrons. Cette opération est chronophage et nécessite l'intervention d'une personne qualifiée, compétente dans le domaine des presses étoupes et des pompes, ainsi qu'une surveillance accrue. De plus, le fait de serrer fort les joints chevrons engendre un besoin d'air comprimé plus important au démarrage de la pompe, typiquement de 1 à 1,5 bars d'air contre 0,3 à 0,4 bars normalement. A l'inverse, un serrage pas assez fort engendre des fuites de produit au démarrage.

C'est à ce problème qu'entend plus particulièrement remédier l'invention, en proposant une nouvelle pompe pour produit liquide qui supprime l'étape de maintenance et de surveillance.

À cet effet, l'invention a pour objet une pompe du type mentionné ci-dessus, dans laquelle la couronne est mobile en translation par rapport à la paroi entre une première position, dans laquelle le logement de réception a un volume minimum, et une deuxième position, dans laquelle le logement de réception a un volume strictement supérieur au volume minimum.

Ainsi l'organe de compression axiale participe à la compression permanente des joints chevrons, de manière à éviter les fuites de produit liquide, sans procéder à des étapes de maintenance régulières Le dispositif d'étanchéité peut ainsi être considéré comme « auto-resserrant ».

Selon des aspects avantageux mais non obligatoires de l'invention, une telle pompe incorpore une ou plusieurs des caractéristiques suivantes, prises selon toute combinaison techniquement admissible :
- Le volume minimum du logement de réception est délimité par un alésage ménagé dans la paroi et par un alésage ménagé dans la couronne, les alésages respectifs étant en regard l'un de l'autre.
- Le dispositif d'étanchéité comprend une cartouche, disposée coaxialement à un axe déplacement du piston et autour la tige de piston et délimitant un volume intérieur destiné à accueillir l'empilement de joint chevrons, et une bague, l'empilement de joints chevrons et la bague étant arrangés coaxialement à l'axe de déplacement autour de la tige de piston, la bague étant adaptée pour coopérer par complémentarité de formes avec un joint situé à l'extrémité de l'empilement de joints chevrons, à l'opposé de l'organe de compression axial.

- Le piston et la chambre forment un volume variable en fonction du déplacement de la tige de piston, destiné à accueillir et mettre sous pression le produit liquide, la pression du produit liquide dans le volume variable exerçant sur la bague une force parallèle à l'axe de déplacement du piston dans la chambre, la bague comprimant l'empilement de joints chevrons sous l'effet de la force exercée par le produit liquide dans un premier sens, et l'organe de compression axial participant à la compression de l'empilement des joints chevrons en exerçant une force de compression, parallèle à l'axe de déplacement du piston, dans un deuxième sens, opposé au premier sens.
- Une empreinte est ménagée dans la surface de la paroi orientée vers l'intérieur de la chambre, une extrémité de la cartouche prend appui sur le fond de l'empreinte et l'extrémité de la cartouche comporte au moins un relief pour l'engagement d'un outil.
- L'organe élastique de rappel est un ressort de compression à fil plat.
- La couronne comprend un témoin d'usure des joints chevrons de l'empilement, traversant la paroi et visible depuis l'extérieur de la pompe.

Selon un aspect de l'invention indépendant de ceux mentionnés ci-dessus, en particulier de la structure du dispositif d'étanchéité, le piston et la tige de piston appartiennent à un équipage mobile selon un mouvement alternatif le long d'un axe de déplacement du piston, alors que cet équipage comprend trois parties assemblées ensemble de façon réversible, à savoir le piston, la tige de piston et un embout de solidarisation avec une tige de sortie du moteur extérieur. Dans ce cas, on peut prévoir que la tige de piston est symétrique par rapport à un plan passant par son centre et perpendiculaire à l'axe de déplacement du piston, de sorte qu'elle peut être montée dans deux positions tête-bêche dans la pompe. En outre, la tige de piston comporte avantageusement deux parties d'extrémité taraudées ou filetées dans ou autour desquelles sont vissées le piston, d'une part, et l'embout, d'autre part.

Selon un autre aspect, l'invention concerne une installation de pulvérisation de produit liquide, notamment une installation de pulvérisation airless, qui comprend une pompe telle que mentionné ci-dessus, un pulvérisateur et un tuyau reliant fluidiquement la pompe au pulvérisateur pour transférer le produit liquide de la pompe au pulvérisateur.

L'invention sera mieux comprise et d'autres avantages de celle-ci apparaîtront plus clairement à la lumière de la description qui va suivre, d'un mode de réalisation de l'invention conforme à son principe, donnée uniquement à titre d'exemple et faite en référence aux dessins dans lesquels :
[Fig 1] la figure 1 est une vue en perspective d'une installation comprenant une pompe conforme à l'invention, un pulvérisateur et un tuyau reliant la pompe au pulvérisateur ;
[Fig 2] la figure 2 est une coupe schématique, dans un plan II de la figure 1, de la pompe de l'installation de la figure 1 ;
[Fig 3] la figure 3 est une vue à plus grande échelle du détail cerclé III à la figure 2, dans une première configuration de la pompe ;
[Fig 4] la figure 4 est une vue éclatée du dispositif d'étanchéité auto-resserrant de la pompe des figures 2 et 3 et de son environnement ;
[Fig 5] la figure 5 est une vue à plus grande échelle du détail cerclé III à la figure 2, dans une deuxième configuration de la pompe ; et
[Fig 6] la figure 6 est une coupe éclatée d'un équipage mobile appartenant à la pompe des figures 1 à 5.

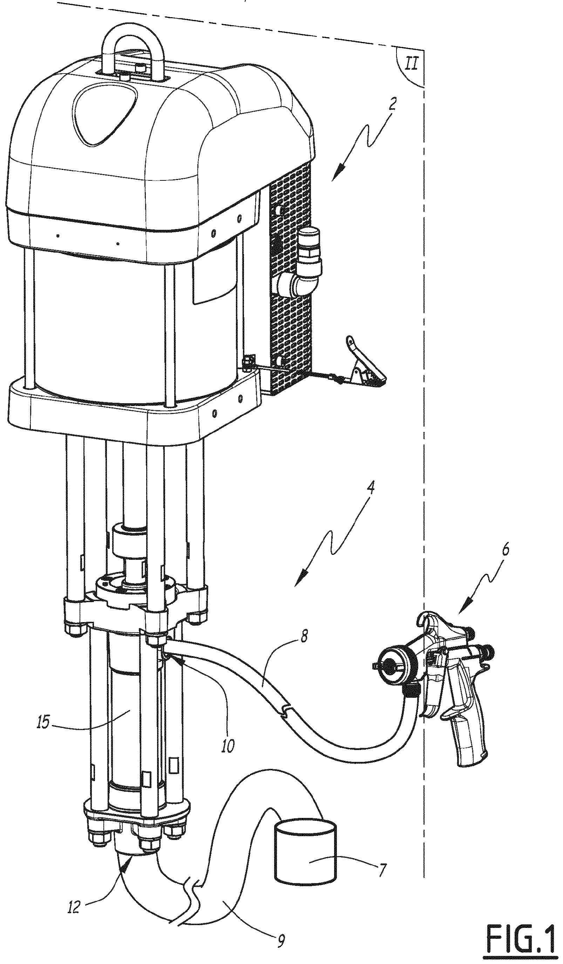

L'installation 2 représentée à la figure 1 comprend une pompe 4 pour produit liquide, un pulvérisateur 6 et un tuyau 8 reliant fluidiquement la pompe 4 au pulvérisateur 6 pour transférer le produit liquide de la pompe 4 au pulvérisateur 6.

Le pulvérisateur 6, destiné à projeter un produit liquide sur une surface cible, non représentée sur les figures, est par exemple un pistolet manuel comme visible à la figure 1, ou un pulvérisateur automatique, connu en soi. Le pulvérisateur est de type « airless », c'est-à-dire capable de pulvériser le produit liquide sans ajout d'air de pulvérisation. En ce sens, l'installation 2 est une installation de type airless. Pour ce faire, la pression du produit liquide fournit par la pompe 4 au pulvérisateur 6 doit être élevée, par exemple supérieure à 30 bars.

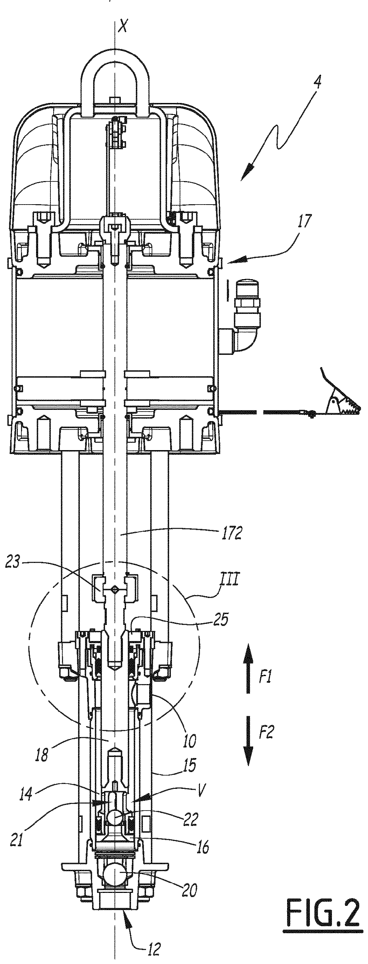

La pompe 4 comporte un corps 15 dans lequel est formée une ouverture d'aspiration ou d'entrée 12 pour aspirer le produit liquide et une ouverture de refoulement ou de sortie 10 pour injecter le produit liquide vers le pulvérisateur 6 à travers le tuyau 8. L'ouverture d'entrée 12 est par exemple équipée d'un clapet 20 visible à la figure 2. L'ouverture d'entrée 12 est reliée fluidiquement à un réservoir 7 de produit liquide, à travers un tuyau 9.

Le corps 15 délimite intérieurement une chambre de compression 14 cylindrique, visible notamment sur la figure 2, dans laquelle un piston 16 est monté coulissant selon un axe X. La pompe 4 comporte un moteur d'actionnement 17 extérieur au corps de pompe 15 et relié au piston 16 par une tige de piston 18 traversant une paroi 26 solidaire du corps de pompe 15. En configuration montée de la pompe 4, l'axe X est confondu avec l'axe longitudinal L18 de la tige 18.

En pratique, un raccord 19 vissé dans la tige 18 est accouplé à une tige 172 de sortie du moteur 17 au moyen d'un assemblage à brides 23, connu en soi. Les tiges 172 et 18 sont solidaires en translation parallèle à l'axe X.

Le moteur est, par exemple, un moteur électrique, pneumatique ou à combustion interne.

La pompe 4 fonctionne de manière cyclique. Un cycle est composé d'une phase d'aspiration associée à une phase de refoulement. L'alternance entre les deux phases est dictée par le mouvement en translation de la tige de piston 18 et du piston 16 dans la chambre 14. Sous l'action du moteur 17, la tige de piston 18 et le piston 16 se déplacent dans un mouvement de translation alternatif, selon l'axe X, par rapport à la paroi 26 qui est fixe. La tige de piston 18 est ainsi déplaçable dans un premier sens matérialisé par la flèche F1 sur la figure 2 et dans le sens inverse, matérialisé par la flèche F2 sur la figure 2. La chambre 14 et le piston 16 délimitent, à l'intérieur de la pompe 4 et en fonction du déplacement de la tige de piston 18, un volume V variable dans lequel est aspiré le produit liquide lors de la phase d'aspiration par l'ouverture d'entrée 12, le produit liquide est ensuite refoulé par l'ouverture de sortie 10, vers le tuyau 6 lors de la phase de refoulement.

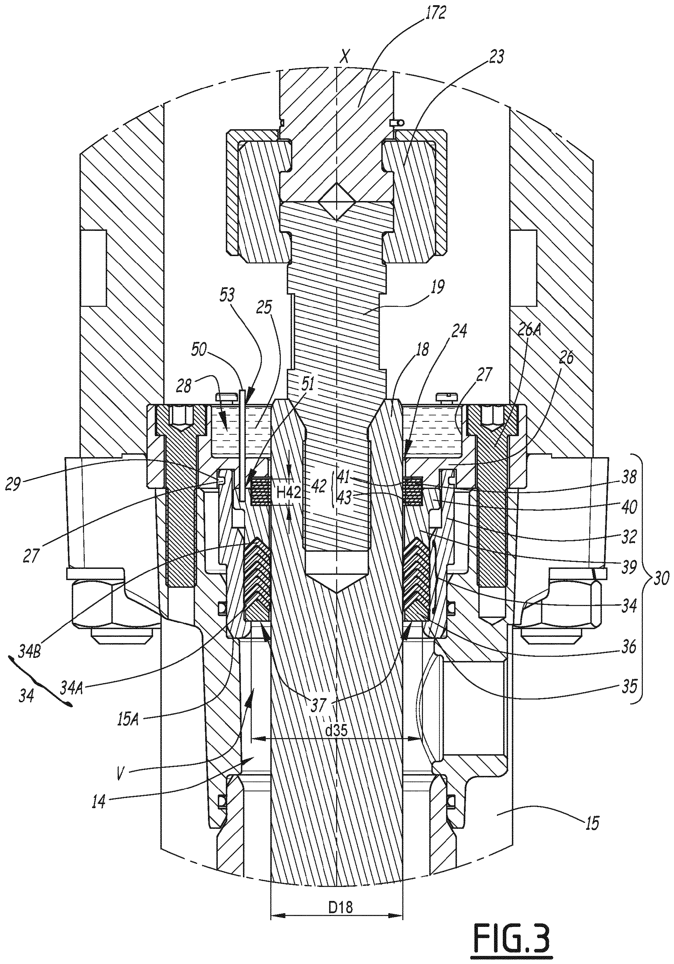

Comme visible sur la figure 3, la paroi 26 comporte une ouverture de passage 24 pour le passage de la tige de piston 18. La paroi 26 présente extérieurement, c'est-à-dire à l'opposé de la chambre de compression 14, un alésage axial 28 autour de la tige de piston 18, ménagé coaxialement à l'axe X. L'alésage 28 est obturé par un couvercle annulaire 25A, également disposé autour de la tige de piston 18, pour former un espace de retenue en forme de coupelle annulaire 25 pour un lubrifiant. La coupelle 25 et la paroi 26 sont retenues sur le corps 15 par des vis 26A. Un lubrifiant peut être disposé dans le volume de retenue formé par la coupelle 25, en étant protégé par le couvercle 25A, ce qui permet de « mouiller » en permanence la surface radiale externe de la tige de piston 18.

L'ouverture de passage 24 est équipée d'un dispositif d'étanchéité 30 qui est reçu dans un chambrage du corps 15 et est retenu axialement en appui entre le corps 15 et la paroi 26.

Le dispositif d'étanchéité 30 comprend une cartouche de révolution 32, disposée coaxialement à l'axe X, autour de la tige 18. La cartouche est une pièce rigide en forme de manchon annulaire, à section cylindrique centrée sur l'axe X.

Une empreinte 29 annulaire et coaxiale à l'axe X est ménagée sur la surface interne 26B de la paroi 26, c'est-à-dire la surface de la paroi 26 tournée vers la chambre de compression. Une extrémité de la cartouche 32 prend appui sur le fond de cette empreinte 29.

La première extrémité de la cartouche 32 engagée dans l'empreinte 29 comporte au moins un relief 27 pour l'engagement d'un outil, facilitant le démontage de la cartouche 32 et de l'ensemble du dispositif d'étanchéité 30. Comme visible sur les figures, le relief 27 est préférentiellement une gorge annulaire. En variante, le relief 27 peut avoir une géométrie différente d'une gorge annulaire, par exemple plusieurs encoches distinctes, ménagées dans la cartouche 32 et réparties régulièrement autour de l'axe X.

A sa deuxième extrémité, opposée à la première extrémité, la cartouche 32 s'appuie sur un épaulement 15A du corps 15.

La cartouche 32 étant ainsi arrêtée axialement, le long de l'axe X, entre le corps 15 et la paroi 26.

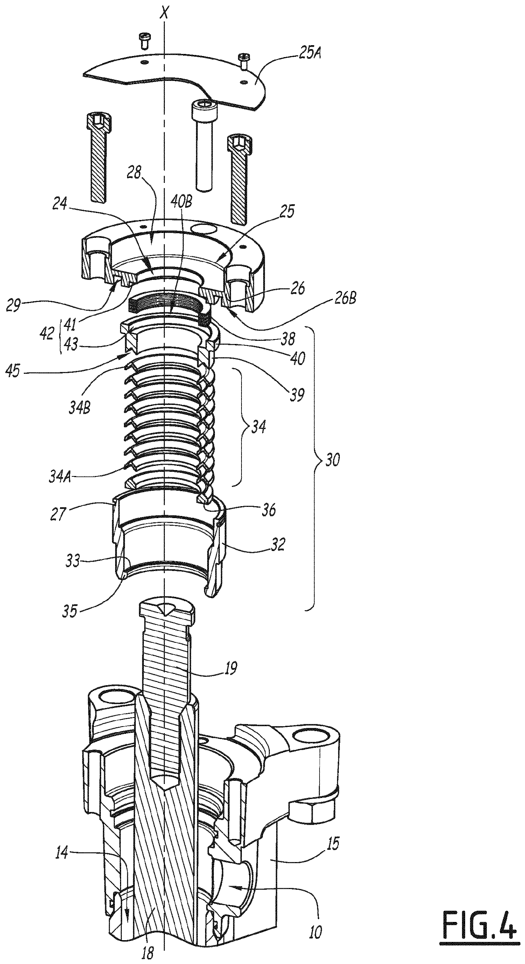

La cartouche 32 délimite intérieurement un volume accueillant un empilement de joints 34. L'empilement de joints 34 est coaxial à l'axe X et disposé autour de la tige 18. Il comprend au moins deux joints en forme de chevrons ou de V et de préférence entre six et dix joints superposés le long de l'axe X, comme visible à la figure 4.

La cartouche 32 entoure une bague 36 et une couronne 39, la bague 36 et la couronne 39 étant toutes les deux coaxiales à l'axe X et disposées autour de la tige 18. Ainsi, la bague et la couronne 39 sont disposées dans le volume intérieur de la cartouche 32. La bague 36 coopère par complémentarité de formes avec un premier joint 34A situé à l'extrémité de l'empilement de joints 34 chevrons, du côté du piston 16. La bague 36 est en appui sur un épaulement 33 interne de la cartouche 32 qui est formé par une collerette radiale interne 35 de la cartouche 32, qui s'étend radialement en direction de la tige 18 et à distance de celle-ci. La collerette 35 et la tige 18 délimitent entre elles, radialement à l'axe X, une zone annulaire de contact 37 entre la bague 36 et le produit liquide présent à l'intérieur de la chambre 14.

Le rapport entre le diamètre externe D18 de la tige 18 et le diamètre interne d35 de la collerette 35 de la cartouche 32 est compris entre 1.05 et 1.5, de préférence entre 1.2 et 1.4, de préférence encore de l'ordre de 1.3. En outre, la différence entre les diamètres d35 et D18 est comprise entre 0.05 et 10 mm

Le dispositif d'étanchéité 30 comprend, en outre, un organe 38 de compression axial disposé coaxialement à l'axe X autour de la tige 18 et interposé entre une extrémité de la couronne 39, située à l'opposé de l'empilement 34 de joints, et la paroi 26.

Ici l'organe de compression axial est formé par un ressort de compression à fil plat.

Sur son côté opposé à l'empilement de joints 34, la couronne 39 définit un alésage 43 qui reçoit une partie l'organe de compression 38, alors qu'une autre partie de cet organe est reçu dans un alésage 41 ménagé dans la surface interne 26B de la paroi 26 tournée vers la chambre de compression 14. Les alésages 41 et 43 sont en regard l'un de l'autre, parallèlement à l'axe X, et constituent ensemble un logement de réception 42, destiné à accueillir l'organe 38.

La couronne 39 comporte également, sur son côté opposé à l'alésage 43, c'est-à-dire sur son côté tourné vers l'empilement 34, une gorge 45 adaptée pour coopérer par complémentarité de formes avec un joint 34B situé à l'extrémité de l'empilement 34 de joints chevrons opposée de la bague 36.

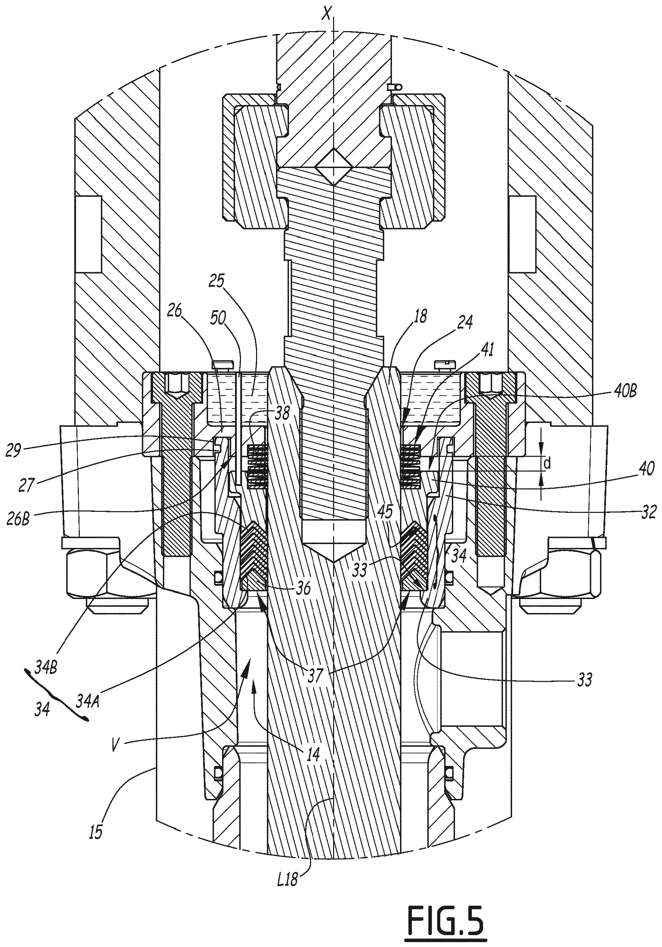

La couronne 39 comporte, radialement à l'extérieur de l'alésage 41, une collerette extérieure 40 délimitant avec la paroi 26 une course de déplacement de la couronne 39 sous l'action du ressort 38. La couronne 39 est mobile en translation, selon l'axe X et par rapport à la paroi 26, entre une première position, visible à la figure 3, et une deuxième position, visible à la figure 5, et réciproquement.

Dans la configuration visible à la figure 3, une surface plane le 40B de la collerette 40, perpendiculaire à l'axe X, est plaquée contre la surface interne 26B de la paroi 26. Le logement 42 présente alors un volume minimum, égal à la somme des volumes des parties des alésages 41 et 43 situées autour de la tige 18.

Dans la configuration visible à la figure 5, la surface plane 40B s'étend à une distance axiale d non nulle de la surface 26B et le logement 42 présente un volume augmenté, strictement supérieur au volume minimum, ce volume augmenté comprenant non seulement la somme des volumes des parties des alésages 41 et 43 situées autour de la tige 18 mais également un volume annulaire de même largeur radiale et de hauteur d.

Comme visible sur les figures 3 et 5, la collerette 40 de la couronne 39 est équipée d'un témoin 50 d'usure des joints chevrons de l'empilement 34. Le témoin 50 d'usure est préférentiellement une goupille graduée qui traverse la paroi 26, à travers un orifice 51, et le couvercle 25A, à travers un orifice 53. Le témoin 50 dépasse du couvercle 25A, de manière à être visible depuis l'extérieur de la pompe 4.

La pompe 4 est équipée d'au moins deux clapets anti-retour 20 et 22 constitués par des billes en appui sur des sièges formés par le corps de pompe 15. L'ouverture et la fermeture des clapets anti-retour 20 et 22 au cours du cycle de fonctionnement de la pompe 4 régulent le sens de circulation du produit liquide de l'ouverture d'entrée 12 vers l'ouverture de sortie 10. Lorsque le piston 16 et la tige 18 se déplacent dans le sens F1, le clapet anti-retour 20 est ouvert, tandis que le clapet anti-retour 22 est fermé, le produit liquide est aspiré dans la chambre 14 à travers l'ouverture d'entrée 12 non obstruée par le clapet anti-retour 20. Le produit liquide se situe alors dans le volume variable V compris entre les clapets anti-retour 20 et 22. Lorsque le piston 16 et la tige 18 se déplacent dans le sens F2, le clapet anti-retour 20 est fermé, ce qui empêche le produit liquide, aspiré précédemment, de s'écouler à travers l'ouverture d'entrée 12, tandis que le clapet anti-retour 22 est ouvert, laissant ainsi passer le produit liquide à travers une ouverture de circulation 21, qui était fermée par le clapet anti-retour 22 lors du mouvement du piston dans le sens F1. Lors du prochain déplacement du piston 16 dans le sens F1, la pression du produit liquide dans la chambre 14 augmente, le produit liquide est alors refoulé par l'ouverture de sortie 10 et vers le tuyau 6.

Tant que le produit liquide est à l'intérieur de la pompe 4, ce produit est contraint à se déplacer uniquement suivant le sens F1, puisque les clapets anti-retour 20 et 22 bloquent le flux du produit liquide dans le sens F2, c'est-à-dire le sens inverse au sens F1, que le piston 16 et la tige 18 se déplacent dans le sens F1 ou dans le sens F2.

Au cours du cycle de fonctionnement de la pompe 4, la bague 36 est soumise à une force exercée sur la zone de contact 37 par le liquide présent dans la chambre de compression 14, cette force étant exercée suivant l'axe X et orientée selon le sens F1. Cette force exercée sur la zone de contact 37 est telle que la bague 36 tend à se déplacer en translation selon l'axe X dans le sens F1, le déplacement maximal étant de l'ordre de quelques millimètres, en pratique inférieur à 5 mm.

L'empilement 34 de joints chevrons est ainsi comprimé par l'intermédiaire de la bague 36 sous l'effet de la force exercée sur la zone de contact 37 par le produit liquide sous pression. Le rapport entre le diamètre externe D18 de la tige 18 et le diamètre interne d35 de la collerette 35 assure que l'aire de la zone de contact 37 est relativement importante, permettant ainsi une meilleure répartition de la pression sur la bague 36.

Dans la configuration de la figure 5, l'organe de compression 38 travaille de manière à déplacer, selon l'axe X, dans le sens F2, la couronne 39 mobile en translation, dans le but de comprimer l'empilement 34 de joints chevrons dans ce même sens.

Ainsi, pour une pression dans la chambre 14 comprise entre 0 et 2 bars, la force de rappel exercée par l'organe de compression 38 sur le joint 34B, par l'intermédiaire de la couronne 39, comprime l'empilement 34 des joints chevrons dans le sens F2, c'est-à-dire dans le sens inverse de la force de pression exercée par le produit liquide présent dans la chambre de compression 14, laquelle est négligeable devant celle exercée par l'organe de compression. L'organe de compression 38 assure alors quasiment à lui seul la compression de l'empilement 34 des joints chevrons, et donc l'étanchéité de la pompe 4. On est alors dans la configuration de la figure 5.

Dans le cas où la pression du produit dans la chambre est compris supérieure à 2 bars, deux forces distinctes et de sens opposés s'exercent de part et d'autre de l'empilement 34, à savoir la force de rappel exercée par l'organe de compression 38 et la force de pression comprimant les joints chevrons entre eux, permettant ainsi au dispositif d'étanchéité 30 et tout particulièrement à l'empilement 34 de joints de s'auto-serrer et d'assurer ainsi l'étanchéité de la pompe 4 jusqu'à l'usure complète des joints. Pour des pressions supérieures à 2 bars, la force de rappel exercée par l'organe 38, dans le sens F2, et la force exercée par le produit liquide sur la bague 36, dans le sens F1, se combinent pour comprimer de part et d'autre l'empilement 34. On est alors dans une configuration intermédiaire entre celles des figures 3 et 5.

Lorsque la pression du produit dans la chambre 14 dépasse le seuil de 2 bars, la force de rappel exercée par l'organe 38 sur l'empilement 34 des joints chevrons est trop faible pour contrer la force issue de la pression du produit. Dans ce cas, la couronne 39 est déplacée en translation suivant l'axe X, dans le sens F1, jusqu'à arriver en butée contre la paroi 26. Cette configuration correspond à celle visible à la figure 3.

Le volume minimum du logement 42 dans lequel est logé l'organe de compression 38 à une hauteur H42, mesurée parallèlement à l'axe X, supérieure à la hauteur de compression maximale que peut endurer l'organe de compression 38. Ce volume minimum évite ainsi à l'organe 38 de se retrouver dans une configuration de spires jointives, cette une configuration étant défavorable pour l'organe de compression 38 et pouvant entraîner sa casse. La collerette 40 et l'alésage 41 protègent ainsi le l'organe 38 contre un écrasement, dans le cas où la pression du produit liquide dans la chambre 14 dépasse un seuil donné.

Dès que l'intensité de la force exercée par le fluide sous pression diminue en deçà de 2 bars, l'organe de compression recommence à comprimer l'empilement 34 des joints chevrons.

La valeur de seuil de 2 bars mentionnée ci-dessus est un exemple ; il s'agit d'une pression relative et elle dépend des caractéristiques du ressort 38. En pratique, elle est comprise entre 1 et 20 bars.

Avec l'usure, les joints chevrons de l'empilement 34 ont tendance à s'affaisser ; l'empilement 34 perd alors en hauteur. Comme le témoin 50 est intégré à la collerette 40 qui est solidaire de la couronne 39 posée sur l'empilement 34, et puisque la collerette 40 est monobloc avec la couronne 39, le témoin a tendance à s'enfoncer dans la coupelle 25, à travers l'orifice 53 du couvercle 25A, renseignant ainsi un utilisateur sur l'usure des joints chevrons de l'empilement 34, sans avoir besoin de démonter la pompe. Il est donc possible d'alerter l'utilisateur, dans le cas où les joints sont trop usés et doivent être changés, sans avoir à démonter la pompe pour procéder à des vérifications périodiques.

Alternativement, l'organe de compression 38 est un ressort hélicoïdal à fil de section circulaire, un empilement de rondelles, notamment de rondelles Belleville, ou tout autre organe de compression apte à remplir sa fonction telle que décrite précédemment.

Même si l'invention est particulièrement bien adaptée aux installations de pulvérisation de type airless, elle peut être mise en œuvre dans d'autres types d'installation, notamment les installations de pulvérisation avec pulvérisateur pneumatique où la pulvérisation est assistée par un flux d'air.

En variante, la totalité du volume minimum du logement de réception 42 peut être formée dans la couronne 39. En d'autres termes, l'organe de compression 38 est en appui simple sur la surface 26B et l'alésage 41 est supprimé.

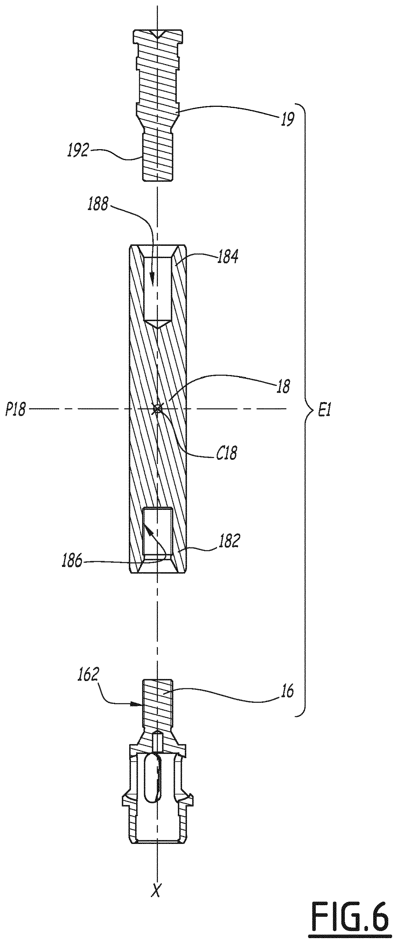

Selon un aspect avantageux qui est indépendant de la structure du dispositif d'étanchéité 30, le piston 16 et l'embout 19 sont vissés aux deux extrémités opposées basse 182 et haute 184 de la tige 18 et constituent avec elle un équipage E1 mobile le long de l'axe X. Cet équipage est représenté seul, en coupe axiale éclatée, à la figure 6.

Pour ce faire, l'extrémité 182 est pourvue d'un taraudage 186 dans lequel est vissée une partie filetée 162 du piston 16 et l'extrémité haute 184 est pourvue d'un taraudage 188 dans lequel est vissé une partie filetée 192 de l'embout 19.

Ainsi, l'équipage E1 est formé par un assemblage réversible des pièces 16 et 19 sur la tige 18, ce qui permet de désolidariser ces pièces en cas de changement de l'une d'entre elles lors d'une opération de maintenance, notamment de la tige 18 à cause des frottements au niveau de l'empilement de joints 34. Ainsi, il n'est pas nécessaire de changer systématiquement l'équipage E1 en entier.

La fabrication de l'équipage E1 en trois sous-ensemble distincts, à savoir le piston 16, la tige 18 et l'embout 19, est plus économique qu'une fabrication monobloc. En outre, la tige 18 est plus facile à usiner qu'un équipage E1 monobloc, ce qui élargit le panel de fournisseurs potentiels.

Compte tenu de la structure multipartite de l'équipage E1, les matériaux utilisés pour fabriquer les pièces 16, 18 et 19 peuvent être différents les uns des autres et adaptés à la fonction de chacun de ces sous-ensembles. Par exemple, la tige 18 peut être fabriquée en chrome hexavalent, sans que les pièces 16 et 19 soient dans ce matériau, ce qui est avantageux en termes de conformité à la réglementation d'approvisionnement de ce métal en Europe.

On note P18 un plan passant par le centre C18 de la tige 18 et perpendiculaire à l'axe X. La tige 18 est symétrique par rapport au plan P18, ce qui permet de la monter dans la pompe 4 dans deux positions tête-bêche, à savoir la position représentée sur les figures et une position inversée où à l'extrémité 182 est située en haut et l'extrémité 184 est située en bas, le piston 16 étant alors vissé sur l'extrémité 184 et l'embout 19 étant alors vissé sur l'extrémité 182.

Selon une variante non représentée de l'invention, les extrémités 182 et 184 de la tige 18 peuvent être filetées, alors que le piston 16 et l'embout 19 sont taraudés de façon correspondante. Dans ce cas, il s'agit d'une inversion de structure par rapport au mode de réalisation représenté sur les figures.

L'invention n'est pas limitée à la pulvérisation de produit de revêtement. La pompe 4 peut être mise en oeuvre pour déplacer d'autres liquides, tels que de l'eau, de l'huile, de l'encre ou une colle liquide mono ou bi-composant.

Le mode de réalisation et les variantes mentionnés ci-dessus peuvent être combinés entre eux pour générer de nouveaux modes de réalisation, tel que défini par les revendications annexées.

## Revendications

1. Pompe (4) pour produit liquide comportant :
- un corps (15) délimitant intérieurement une chambre de compression (14), dans laquelle un piston (16) est monté coulissant,
- un moteur extérieur (17) relié au piston (16) pour son déplacement par une tige de piston (18) traversant une paroi (26) solidaire du corps de pompe, au travers d'une ouverture de passage (24) équipé d'un dispositif d'étanchéité (30) comportant un empilement de joints (34) maintenus serrés axialement contre le corps (15) de pompe,
dans laquelle le dispositif d'étanchéité (30) comporte un organe de compression axial (38) interposé entre une couronne (39), comprise dans le dispositif d'étanchéité (30), et la paroi (26) solidaire du corps de pompe (15), dans laquelle la couronne (39) délimite, en partie, un logement de réception (42) destiné à accueillir l'organe (38) de compression axial, **caractérisée en ce que** la couronne (39) est mobile en translation par rapport à la paroi (26) entre une première position, dans laquelle le logement de réception (42) a un volume minimum, et une deuxième position, dans laquelle le logement de réception (42) a un volume strictement supérieur au volume minimum.

2. Pompe (4) selon la revendication 1, **caractérisée en ce que** le volume minimum du logement de réception (42) est délimité par un alésage (41) ménagé dans la paroi (26) et par un alésage (43) ménagé dans la couronne (39), les alésages respectifs (41, 43) étant en regard l'un de l'autre.

3. Pompe (4) selon l'une quelconque des revendications précédentes, **caractérisée en ce que** le dispositif d'étanchéité (30) comprend une cartouche (32), disposée coaxialement à un axe (X) déplacement du piston (16) et autour la tige de piston (18) et délimitant un volume intérieur destiné à accueillir l'empilement de joints (34), et une bague (36), l'empilement (34) de joints chevrons et la bague (36) étant arrangés coaxialement à l'axe de déplacement (X) autour de la tige de piston (18), la bague (36) étant adaptée pour coopérer par complémentarité de formes avec un joint (34A) situé à l'extrémité de l'empilement (34) de joints chevrons, à l'opposé de l'organe de compression axial.

4. Pompe (4) selon la revendication 3, **caractérisée en ce que** le piston (16) et la chambre (14) forment un volume (V) variable en fonction du déplacement de la tige de piston (18), destiné à accueillir et mettre sous pression le produit liquide, la pression du produit liquide dans le volume (V) variable exerçant sur la bague (36) une force parallèle à l'axe (X) de déplacement du piston (16) dans la chambre (14), la bague (36) comprimant l'empilement (34) de joints chevrons sous l'effet de la force exercée par le produit liquide dans un premier sens (F1), et l'organe de compression axial (38) participant à la compression de l'empilement(34) de joints chevrons en exerçant une force de compression, parallèle à l'axe (X) de déplacement du piston (16), dans un deuxième sens (F2), opposé au premier sens (F1).

5. Pompe (4) selon l'une des revendications 3 ou 4, **caractérisée en ce qu'**une empreinte (29) est ménagée dans la surface de la paroi (26) orientée vers l'intérieur de la chambre (14), **en ce qu'**une extrémité de la cartouche (32) prend appui sur le fond de l'empreinte (29) et **en ce que** l'extrémité de la cartouche (32) comporte au moins un relief (27) pour l'engagement d'un outil.

6. Pompe (4) selon l'une quelconque des revendications précédentes, **caractérisée en ce que** l'organe (38) élastique de rappel est un ressort de compression à fil plat.

7. Pompe selon l'une quelconque des revendications précédentes, **caractérisée en ce que** la couronne (39) comprend un témoin (50) d'usure des joints chevrons de l'empilement (34), traversant la paroi (26) et visible depuis l'extérieur de la pompe (4).

8. Pompe (4) selon l'une des revendications précédentes, **caractérisée en ce que** le piston (16) et la tige de piston (18) appartiennent à un équipage (E1) mobile selon un mouvement alternatif le long d'un axe (X) de déplacement du piston (16) et **en ce que** cet équipage comprend trois parties assemblées ensemble de façon réversible, à savoir le piston (16), la tige de piston (18) et un embout (19) de solidarisation avec une tige (172) de sortie du moteur extérieur (17)

9. Pompe (4) selon la revendication 7, **caractérisée en ce que** la tige de piston (18) est symétrique par rapport à un plan (P18) passant par son centre (C18) et perpendiculaire à l'axe (X) de déplacement du piston (16), de sorte qu'elle peut être montée dans deux positions tête-bêche dans la pompe (4).

10. Pompe (4) selon la revendication 8, **caractérisée en ce que** la tige de piston (18) comporte deux parties d'extrémité (182, 184) taraudées ou filetées dans ou autour desquelles sont vissées le piston (16), d'une part, et l'embout (19), d'autre part.

11. Installation (2) de pulvérisation de produit liquide, notamment installation de pulvérisation airless, **caractérisée en ce qu'**elle comprend une pompe (4) selon l'une des revendications précédentes, un pulvérisateur (6) et un tuyau (8) reliant fluidiquement la pompe (4) au pulvérisateur (6) pour transférer le produit liquide de la pompe (4) au pulvérisateur (6).

## Patentansprüche

1. Pumpe (4) für flüssiges Produkt, umfassend:
- einen Körper (15), der intern eine Druckkammer (14) begrenzt, in der ein Kolben (16) gleitend montiert ist,
- einen äußeren Motor (17), der mit dem Kolben (16) zu dessen Verschiebung durch eine Kolbenstange (18) verbunden ist, die eine mit dem Pumpenkörper fest verbundene Wand (26) durch eine Durchgangsöffnung (24) durchquert, die mit einer Dichtungsvorrichtung (30) ausgestattet ist, umfassend einen Stapel von Dichtungen (34), die axial gegen den Körper (15) der Pumpe festgeklemmt gehalten werden, wobei die Dichtungsvorrichtung (30) ein axiales Kompressionsorgan (38) umfasst, das zwischen einem Kranz (39), der in der Dichtungsvorrichtung (30) enthalten ist, und der Wand (26), die mit dem Pumpenkörper (15) fest verbunden ist, eingefügt ist, wobei der Kranz (39) teilweise einen Aufnahmesitz (42) begrenzt, der dazu bestimmt ist, das Organ (38) zur axialen Kompression aufzunehmen, **dadurch gekennzeichnet, dass** der Kranz (39) in Bezug auf die Wand (26) zwischen einer ersten Position, in der der Aufnahmesitz (42) ein minimales Volumen aufweist, und einer zweiten Position, in der der Aufnahmesitz (42) ein Volumen aufweist, das strikt größer ist als das minimale Volumen, translatorisch beweglich ist.

2. Pumpe (4) nach Anspruch 1, **dadurch gekennzeichnet, dass** das Mindestvolumen des Aufnahmesitzes (42) durch eine Bohrung (41), die in der Wand (26) angebracht ist, und durch eine Bohrung (43), die in dem Kranz (39) angebracht ist, begrenzt ist, wobei die jeweiligen Bohrungen (41, 43) einander gegenüberliegen.

3. Pumpe (4) nach einem der vorherigen Ansprüche, **dadurch gekennzeichnet, dass** die Dichtungsvorrichtung (30) eine Kartusche (32), die koaxial zu einer Bewegungsachse (X) des Kolbens (16) und um die Kolbenstange (18) herum angeordnet ist und ein Innenvolumen begrenzt, das dazu bestimmt ist, den Dichtungsstapel (34) aufzunehmen, und einen Ring (36) umfasst, wobei der Stapel (34) von Chevron-Dichtungen und der Ring (36) koaxial zu der Verschiebungsachse (X) um die Kolbenstange (18) angeordnet sind, wobei der Ring (36) angepasst ist, um formschlüssig mit einer Dichtung (34A) zusammenzuwirken, die sich an dem Ende des Stapels (34) von Chevron-Dichtungen gegenüber dem axialen Kompressionsorgan befindet.

4. Pumpe (4) nach Anspruch 3, **dadurch gekennzeichnet, dass** der Kolben (16) und die Kammer (14) ein Volumen (V) bilden, das abhängig von der Verschiebung der Kolbenstange (18) variabel ist und dazu bestimmt ist, das flüssige Produkt aufzunehmen und unter Druck zu setzen, wobei der Druck des flüssigen Produkts in dem variablen Volumen (V) eine Kraft auf den Ring (36) ausübt, die parallel zu der Achse (X) einer Verschiebung des Kolbens (16) in der Kammer (14) ist, wobei der Ring (36) den Stapel (34) von Chevron-Dichtungen unter der Wirkung der durch das flüssige Produkt ausgeübten Kraft in einer ersten Richtung (F1) komprimiert, und das axiale Kompressionsorgan (38) an der Kompression des Stapels (34) von Chevron-Dichtungen mitwirkt, indem es eine Kompressionskraft parallel zu der Achse (X) einer Verschiebung des Kolbens (16) in einer zweiten Richtung (F2), die der ersten Richtung (F1) entgegengesetzt ist, ausübt.

5. Pumpe (4) nach einem der Ansprüche 3 oder 4, **dadurch gekennzeichnet, dass** in der dem Inneren der Kammer (14) zugewandten Oberfläche der Wand (26) eine Vertiefung (29) angebracht ist, dass ein Ende der Kartusche (32) an dem Boden der Vertiefung (29) anliegt und dass das Ende der Kartusche (32) mindestens eine Erhebung (27) zum Eingreifen eines Werkzeugs umfasst.

6. Pumpe (4) nach einem der vorherigen Ansprüche, **dadurch gekennzeichnet, dass** das elastische Rückholorgan (38) eine Flachdraht-Druckfeder ist.

7. Pumpe nach einem der vorherigen Ansprüche, **dadurch gekennzeichnet, dass** der Kranz (39) eine Verschleißanzeige (50) für die Chevron-Dichtungen des Stapels (34) umfasst, die die Wand (26) durchquert und von der Außenseite der Pumpe (4) sichtbar ist.

8. Pumpe (4) nach einem der vorherigen Ansprüche, **dadurch gekennzeichnet, dass** der Kolben (16) und die Kolbenstange (18) zu einer Ausrüstung (E1) gehören, die in einer Hin- und Herbewegung entlang einer Achse (X) einer Verschiebung des Kolbens (16) beweglich ist, und dass diese Ausrüstung drei Abschnitte umfasst, die reversibel zusammengefügt sind, nämlich den Kolben (16), die Kolbenstange (18) und einen Ansatz (19) für eine feste Verbindung mit einer Ausgangsstange (172) des äußeren Motors (17).

9. Pumpe (4) nach Anspruch 7, **dadurch gekennzeichnet, dass** die Kolbenstange (18) symmetrisch zu einer Ebene (P18) ist, die durch ihren Mittelpunkt (C18) und senkrecht zu der Achse (X) einer Verschiebung des Kolbens (16) ist, sodass sie in zwei Kopf-an-Fuß-Positionen in der Pumpe (4) montiert werden kann.

10. Pumpe (4) nach Anspruch 8, **dadurch gekennzeichnet, dass** die Kolbenstange (18) zwei Endabschnitte (182, 184) mit Innen- oder Außengewinde umfasst, in oder um die einerseits der Kolben (16) und andererseits das Mundstück (19) eingeschraubt sind.

11. Anlage (2) zum Zerstäuben eines flüssigen Produkts, insbesondere Airless-Zerstäubungsanlage, **dadurch gekennzeichnet, dass** sie eine Pumpe (4) gemäß einem der vorherigen Ansprüche, einen Zerstäuber (6) und einen Schlauch (8) umfasst, der die Pumpe (4) fluidisch mit dem Zerstäuber (6) verbindet, um das flüssige Produkt von der Pumpe (4) zu dem Zerstäuber (6) zu übertragen.

## Claims

1. A pump (4) for a liquid product including:
- a body (15) inwardly delimiting a compression chamber (14), in which a piston (16) is mounted sliding,
- an external motor (17) coupled to the piston (16) for movement thereof by a piston rod (18) passing through a wall (26) secured to the pump body (15), through a passage opening (24) equipped with a sealing device (30) including a stack of seals (34) kept gripped axially against the pump body (15),
wherein the sealing device (30) includes an axial compression member (38) inserted between a crown (39), comprised in the sealing device (30), and the wall (26) secured to the pump body (15),
wherein the crown (39) delimits, in part, a receiving housing (42) suitable for accommodating the axial compression member (38),
**characterized in that** the crown (39) is translatable relative to the wall (26) between a first position, in which the receiving housing (42) has a minimum volume, and a second position, in which the receiving housing (42) has a volume strictly greater than the minimum volume.

2. The pump (4) according to claim 1, **characterized in that** the minimum volume of the receiving housing (42) is delimited by a bore (41) arranged in the wall (26) and by a bore (43) arranged in the crown (39), the respective bores (41, 43) facing one another.

3. The pump (4) according to any one of the preceding claims, **characterized in that** the sealing device (30) comprises a cartridge (32), arranged coaxially to a movement axis (X) of the piston (16) and around the piston rod (18) and delimiting an inner volume suitable for accommodating the stack of seals (34), and a ring (36), the stack of seals (34) and the ring (36) being arranged coaxially to the movement axis (X) around the rod (18), the ring (36) being suitable for cooperating by shape matching with the seal (34A) located at the end of the stack of seals (34), opposite the axial compression member (38).

4. The pump (4) according to claim 3, **characterized in that** the piston (16) and the compression chamber (14) form a variable volume (V) as a function of the movement of the piston rod (18), suitable for accommodating and pressurizing the liquid product, the pressure of the liquid product in the variable volume (V) exerting, on the ring (36), a force parallel to the movement axis (X) of the piston (16) in the compression chamber (14), the ring (36) compressing the stack of seals (34) under the effect of the force exerted by the liquid product in a first direction (F1), and the axial compression member (38) participating in the compression of the stack of seals (34) by exerting a compression force, parallel to the movement axis (X) of the piston (16), in a second direction (F2), opposite the first direction (F1).

5. The pump (4) according to any one of claims 3 or 4, **characterized in that** a cavity (29) is arranged in the surface of the wall (26) oriented toward the inside of the compression chamber (14), **in that** one end of the cartridge (32) bears on the bottom of the cavity (29) and **in that** the end of the cartridge (32) includes at least one relief (27) for the engagement of a tool.

6. The pump (4) according to any one of the preceding claims, **characterized in that** the axial compression member (38) is a flat compression spring.

7. The pump according to any one of the preceding claims, **characterized in that** the crown (39) comprises a wear indicator (50) of the V-seals of the stack of seals (34), passing through the wall (26) and visible from the outside of the pump (4).

8. The pump (4) according to one of the preceding claims, **characterized in that** the piston (16) and the piston rod (18) belong to equipment (E1) moving in an alternating movement along the movement axis (X) of the piston (16) and **in that** this equipment comprises three parts assembled together reversibly, namely the piston (16), the piston rod (18) and a securing endpiece (19) with an extension rod (172) of the external motor (17).

9. The pump (4) according to claim 7, **characterized in that** the piston rod (18) is symmetrical relative to a plane (P18) passing through its center (C18) and perpendicular to the movement axis (X) of the piston (16), such that the piston rod (18) can be mounted in two positions head to tail in the pump (4).

10. The pump (4) according to claim 8, **characterized in that** the piston rod (18) includes two tapped or threaded end parts (182, 184) in or around which the piston (16), on the one hand, and the securing endpiece (19), on the other hand, are screwed.

11. An installation (2) for spraying a liquid product, in particular an airless spraying installation, **characterized in that** it comprises a pump (4) according to any one of the preceding claims, a sprayer (6) and a pipe (8) fluidly coupling the pump (4) to the sprayer (6) in order to transfer the liquid product from the pump (4) to the sprayer (6).
